Europäisches Patentamt

European Patent Office

Office européen des brevets

(19)

(11) Veröffentlichungsnummer: **0 276 442 B1**

(12) **EUROPÄISCHE PATENTSCHRIFT**

(45) Veröffentlichungstag der Patentschrift: **28.08.91**

(51) Int. Cl.⁵: **G02B 21/34**, G01N 1/30

(21) Anmeldenummer: **87118432.1**

(22) Anmeldetag: **12.12.87**

(54) **Eindeckmittel für Mikroskopie-Präparate.**

(30) Priorität: **24.12.86 DE 3644467**

(43) Veröffentlichungstag der Anmeldung:
**03.08.88 Patentblatt 88/31**

(45) Bekanntmachung des Hinweises auf die
Patenterteilung:
**28.08.91 Patentblatt 91/35**

(84) Benannte Vertragsstaaten:
**BE CH DE FR GB IT LI NL**

(56) Entgegenhaltungen:
**EP-A- 0 226 767      DE-A- 2 456 565**
**DE-A- 2 635 449      DE-A- 2 737 845**
**FR-A- 2 320 543      FR-A- 2 428 853**
**GB-A- 2 155 943**

(73) Patentinhaber: **MERCK PATENT GESELL-**
**SCHAFT MIT BESCHRÄNKTER HAFTUNG**
**Frankfurter Strasse 250 Postfach 4119**
**W-6100 Darmstadt(DE)**

(72) Erfinder: **Kaschek, Renate**
**Rossbergring 63**
**W-6107 Reinheim 5(DE)**
Erfinder: **Rieke, Erwin, Dr.**
**Hermannstrasse 12**
**W-6104 Seeheim(DE)**

## Beschreibung

Die Erfindung betrifft ein neues Eindeckmittel zur Versiegelung von Mikroskopiepräparaten.

In Histologie und Cytologie sind zur Versiegelung von Mikroskopiepräparaten Eindeckmittel bekannt und in Benutzung. Cytochemische und immunhistochemische Präparate werden üblicherweise zunächst auf einen Mikroskopieobjektträger gebracht, je nach Bedarf fixiert und/oder zur besseren Unterscheidung intrazellulärer Bestandteile nach speziellen Methoden angefärbt. Anschließend wird mit einem Eindeckmittel versiegelt. Alternativ kann auch Färbung und Versiegelung gleichzeitig durchgeführt werden (DE-AS 26 35 438, DE-AS 26 35 449 und DE-OS 27 37 845).

Die Eindeckung von histochemischen und cytochemischen Präparaten erfordert die Verwendung von wäßrigen Eindeckmitteln, da einige farbgebende Substanzen durch Verwendung organischer Lösungsmittel gelöst werden, wobei die Anfärbung der Präparate zerstört wird.

Wäßrige Eindeckmittel sind bekannt. Sie basieren auf wasserlöslichen organischen Polymeren wie Gelatine, Polyvinylpyrrolidon oder Polyvinylalkohol. Die bisher verwendeten Eindeckmittel sind aus unterschiedlichen Gründen nicht zufriedenstellend. Gelatinehaltige Eindeckmittel müssen z.B. vor der Verwendung durch Erwärmen verflüssigt werden.

Bei der Verwendung von synthetischen Polymeren als Basispolymer wird dabei zur notwendigen Neutralisation die wäßrige Polymerlösung mit einer üblichen Säure oder Base versetzt. Eine übliche Base ist beispielsweise Natronlauge oder wäßrige Ammoniaklösung.

Solche Eindeckmittel erhalten zwar teilweise die spezifische Färbung des cytochemischen Verfahrens, die mit Hämalaun erhaltene Gegenfärbung des Zellkerns verblaßt jedoch sehr rasch.

Deckt man z.B. zum Nachweis der Peroxidasen-Reaktion in Leukozyten die fixierten und gefärbten Blut- oder Knochenmarkausstriche mit Glyceringelatine oder mit einem auf Polyvinylalkohol basierenden Eindeckmittel ein, so ist nach 3 Wochen die Kernfärbung verblaßt und die Peroxidasefärbung verschwunden. Ohne Eindeckmittel ist die schwarzbraune Granula in Peroxidase positiven Zellen ca. 3 Tage, mit Immersionsöl bedeckt sogar nur wenige Stunden stabil.

Wird ein zum Nachweis der 1-Naphthylacetat-Esterase-Reaktion in Leukozyten fixierter und gefärbter Blut-oder Knochenmarkausschnitt mit Glyceringelatine eingedeckt, so ist nach 3 Wochen die Kernfärbung verblaßt. Ohne Eindeckung ist die rotbraune Granula in Esterase positiven Zellen ca. 5 Tage, mit Immersionsöl direkt bedeckt nur wenige Stunden stabil.

Auch die Eindeckung von immunhistochemisch gefärbten Präparaten ist hinsichtlich der Farberhaltung problematisch. Ein als Nachweis von Immunglobulin G in einem Tonsillenschnitt dienendes Verfahren ist z.B. die Sichtbarmachung von Peroxidase durch Inkubation mit 3-Amino-9-ethylcarbazol. Auch hier verblaßt die Kernfärbung nach Eindeckung mit Glyceringelatine innerhalb weniger Wochen. Zudem wird eine starke Blasenbildung im Präparat beobachtet.

Ein wäßriges Eindeckmittel für Mikroskopiepräparate zu erhalten, welches in der Lage ist, Färbungen intrazellulärer Bestandteile für wesentlich längere Zeit als in obigen Beispielen angegeben, ist bisher nicht bekannt.

Es bestand somit die Aufgabe, ein neues Eindeckmittel bereitzustellen, welches die Eigenschaft besitzt, Mikroskopiepräparate zu versiegeln und dabei die zuvor zur besseren Differenzierung der Zellbausteine durchgeführten Färbungen dauerhaft zu erhalten.

Diese Aufgabe wurde durch die vorliegende Erfindung gelöst.

Es wurde gefunden, daß ein wäßriges Eindeckmittel auf der Basis von wasserlöslichen organischen Polymeren in hervorragender Weise geeignet ist, die Anfärbungen von Mikroskopiepräparaten zu erhalten, wenn zur notwendigen Neutralisation der wäßrigen Lösung von Polyvinylpyrrolidon ein basisches Polymer verwendet wird.

Gegenstand der Erfindung ist somit ein wäßriges Eindeckmittel auf der Basis von wasserlöslichen organischen Polymeren zur Versiegelung von Mikroskopiepräparaten, welches Polyvinylpyrrolidon und ein basisches Polymer enthält. Letzteres dient zur erforderlichen Neutralisation.

Gegenstand der Erfindung ist schließlich die Verwendung solcher Eindeckmittel zur Versiegelung von Mikroskopiepräparaten.

Als Basispolymer enthält das erfindungsgemäße Eindeckmittel das dem Fachmann bekannte und bisher für diesen Zweck üblicherweise verwendete Polyvinylpyrrolidon. Das Molekulargewicht des Polyvinylpyrrolidons kann zwischen 10 000 und 100 000 betragen, vorzugsweise zwischen 10 000 und 50 000 Dalton.

In einer wäßrigen Lösung sollte die Polymerkonzentration des Polyvinylpyrrolidons zwischen 15 und 60 Gew.-%, vorzugsweise zwischen 20 und 40 Gew.-% liegen. Unterhalb von 15 Gew.-% tritt keine dauerhafte Härtung ein, oberhalb von 60 Gew.-% wird nach der Aushärtung eine störende Blasenbildung beobachtet.

Zur Neutralisation der Polymerlösung werden polymere Basen eingesetzt. Aus der Vielzahl der dem Fachmann bekannten und auch im Handel erhältlichen Polymeren sind solche geeignet, die sich gut in Wasser lösen. Die verwendeten Basen sind beispielsweise Polyethylenimin, Poly-(trimethylolmelamin) und Poly-(2-vinylpyridin), vorzugsweise Polyethylenimin mit einem Molekulargewicht von 500 bis 10 000 und vorzugsweise 2 000 Dalton.

Der mit der polymeren Base erzielte pH-Wert liegt zwischen 6,5 und 7,5, vorzugsweise bei 7,0. Die zuzusetzende Menge der polymeren Base hängt von der Acidität der Polymerlösung ab. Das Eindeckmittel kann weiterhin die üblichen Antimycotica, wie z.B. Ethylenglykolmonophenylether, enthalten. Das gebrauchsfähige Gemisch läßt sich bei Raumtemperatur im geschlossenen Gefäß unter Erhalt der Eindeckfähigkeit unbegrenzt lagern.

Ein Verfahren zur Versiegelung von Mikroskopiepräparaten wird z.B. folgendermaßen durchgeführt:
Man bringt das Präparat, einen Blut- oder Knochenmarkausstrich, auf einen Objektträger und fixiert und färbt es nach bekannten Verfahren an. Anschließend wird das Eindeckmittel auf das Präparat aufgebracht und mit einem Deckglas abgedeckt, wobei das Eindeckmittel das Präparat umschließt und Objektträger samt Präparat mit dem Deckglas verklebt. Das Aushärten bei Raumtemperatur dauert mit dem erfindungsgemäßen Eindeckmittel zwischen 30 und 60 Minuten, wogegen bei Verwendung anderer Eindeckmittel mindestens die doppelte Zeit benötigt wird. Nach dem Aushärten erhält man blasenfreie Mikroskopiepräparate von hervorragender Qualität mit hoher Stabilität der cytochemischen und histochemischen Färbungen sowie der Zellkerngegenfärbung über einen Zeitraum von mindestens 12 Monaten.

Das erfindungsgemäße Eindeckmittel ermöglicht somit in vorteilhafter Weise die Herstellung dauerhaft versiegelter Mikroskopiepräparate, wobei überraschenderweise die zur besseren Differenzierung verschiedener Zellkompartimente durchgeführten Anfärbungen über lange Zeit erhalten bleiben.

Die nachfolgenden Beispiele dienen der Erläuterung der Erfindung.

Herstellung eines bevorzugten Eindeckmittels

Beispiel 1

In 2 kg Wasser werden 1 kg Polyvinylpyrrolidon (MG 25 000) gelöst und anschließend durch Zugabe von ca. 25 g Polyethylenimin (MG 2 000) neutralisiert. Die leicht gelbliche Lösung ist nach Filtration verwendungsfähig.

Beispiel 2

In 100 g Wasser werden 40 g Polyvinylpyrrolidon gelöst und anschließend durch Zugabe von 4,5 g Poly-(trimethylolmelamin) neutralisiert (pH = 6,8). Die leicht gelbliche Lösung ist nach Filtration verwendungsfähig.

Beispiel 3

Nachweis der Peroxidasen-Reaktion in Leukozyten

Die fixierten Blut- oder Knochenmarkausstriche werden in einer 25%igen alkoholischen Lösung von 4-Chlor-1-naphthol und Wasserstoffsuperoxid gefärbt. Die anschließende Kernfärbung erfolgt mit Hämalaun-Lösung.

Ohne Eindeckung ist die schwarzbraune Granula in Peroxidase positiven Zellen ca. 3 Tage, mit Immersionsöl direkt bedeckt nur wenige Stunden stabil.

Erfolgt dagegen die Eindeckung mit dem erfindungsgemäßen Eindeckmittel und einem Deckglas, bleibt die Färbung mindestens 12 Monate stabil.

Erfolgt die Eindeckung mit Glyceringelatine oder mit einem auf Polyvinylalkohol basierendem Eindeckmittel, so ist nach 3 Wochen die Kernfärbung verblaßt und die Peroxidase-Färbung verschwunden.

Beispiel 4

Nachweis der 1-Naphthylacetat-Esterase-Reaktion in Leukozyten

Die fixierten Blut- oder Knochenmarkausstriche werden in einer gepufferten Lösung, die 1-Naphthylacetat und ein Diazoniumsalz enthält, gefärbt. Die anschließende Kernfärbung erfolgt mit Hämalaun-Lösung.

Ohne Eindeckung ist die rotbraune Granula in Esterase positiven Zellen ca. 5 Tage, mit Immersionsöl direkt bedeckt nur wenige Stunden stabil.

Erfolgt dagegen die Eindeckung mit dem erfindungsgemäßen Eindeckmittel und einem Deckglas, bleibt die Färbung mindestens 12 Monate stabil.

Erfolgt die Eindeckung mit Glyceringelatine, so ist nach 3 Wochen die Kernfärbung verblaßt.

Beispiel 5

Eindeckung eines immunhistochemisch gefärbten Präparates

Zum Nachweis von Immunglobulin G in einem Tonsillenschnitt wurde das Präparat nach bekannten Verfahren mit einem primären Antikörper, einem Brückenantikörper und einem Peroxidase/Antiperoxidase-Komplex inkubiert. Anschließend wurde die Peroxidase durch Inkubation mit 3-Amino-9-ethylcarbazol sichtbar gemacht. Nach Gegenfärbung mit Hämalaun-Lösung wurde mit dem erfindungsgemäßen Eindeckmittel eingedeckt. Während die Färbung mit diesem Eindeckmittel mindestens 12 Monate stabil blieb, verblaßte die Kernfärbung nach Eindeckung mit Glyceringelatine innerhalb weniger Wochen. Außerdem war hier eine starke Blasenbildung im Präparat zu verzeichnen.

**Patentansprüche**

1.  Wäßriges Eindeckmittel auf der Basis von wasserlöslichen organischen Polymeren zur Versiegelung von Mikroskopiepräparaten, dadurch gekennzeichnet, daß es Polyvinylpyrrolidon und ein basisches Polymer enthält.

2.  Verwendung des Eindeckmittels nach Anspruch 1 zur Versiegelung von Mikroskopiepräparaten.

**Claims**

1.  Aqueous covering agent based on water-soluble organic polymers for sealing microscopy specimens, characterised in that it contains polyvinylpyrrolidone and a basic polymer.

2.  The use of the covering agent according to Claim 1 for sealing microscopy specimens.

**Revendications**

1.  Composition aqueuse de montage à base de polymères organiques solubles dans l'eau pour le lutage de préparations microscopiques, caractérisée en ce qu'elle contient de la polyvinylpyrrolidone et un polymère basique.

2.  Utilisation de la composition de montage selon la revendication 1 pour le lutage de préparations microscopiques.